# DEMANDE DE BREVET EUROPEEN

(11) **EP 0 890 728 A1**
(43) Date de publication de la demande: **13.01.1999**
(21) Numéro de dépôt: 98401736.8
(22) Date de dépôt: 09.07.1998
(51) Int. Cl.: F02K 1/76, B64D 29/06

(54) **Inverseur de poussee a visualisation de verrouillage**

(30) Priorité: 10.07.1997 FR 9708763
(71) Demandeur: Hispano-Suiza Aérostructures, 76700 Gonfreville l'Orcher (FR)
(72) Inventeur: Baudu, Pierre André Marcel, 76600 Le Havre (FR); Gonidec, Patrick, 76290 Montivilliers (FR); Rouyer, Pascal Gérard, 76430 Saint Aubin (FR); Vauchel, Guy Bernard, 76610 Le Havre (FR)

(57) **Abrégé**

L'invention se rapporte aux inverseurs de poussée pour turbomoteurs d'aéronefs et plus particulièrement à de tels inverseurs (10) spécialement conçus pour permettre un contrôle visuel au sol du verrouillage des obturateurs (25).

Un tel inverseur (10) est remarquable en ce que le pêne (37) du verrou (36) émerge au moins en partie de la paroi (13, 14) délimitant radialement la structure annulaire (12) de l'inverseur (10) lorsque ledit pêne (37) est ouvert.

## Description

l'invention se rapporte aux inverseurs de poussée pour turbomoteur d'aéronef, et plus particulièrement à de tels inverseurs spécialement conçus pour permettre un contrôle visuel au sol du verrouillage des obturateurs.

Les inverseurs de poussée pour aéronef sont des dispositifs bien connus permettant d'inverser la direction du flux de gaz de propulsion généré par le turbomoteur propulsant l'aéronef, afin de ralentir ledit aéronef.

Les inverseurs de poussée comportent une structure annulaire entourant le turbomoteur. Cette structure annulaire comporte elle-même une première partie ou structure fixe traversée par une pluralité d'ouvertures radiales, et une seconde partie constituée par au moins un obturateur mobile venant fermer les ouvertures radiales. Lorsque les ouvertures radiales sont fermées, le flux de gaz de propulsion généré par le turbomoteur est canalisé vers l'arrière afin de propulser l'aéronef. Lorsque les ouvertures radiales sont ouvertes, le flux de gaz de propulsion passe par lesdites ouvertures et revient vers l'avant afin de ralentir l'aéronef. Une grande sécurité est requise dans le maintien des obturateurs en position fermée. C'est pourquoi chaque obturateur est maintenu fermé par au moins un système de verrouillage principal et au moins un système de verrouillage de secours chargé de maintenir l'obturateur fermé malgré la défaillance du système de verrouillage principal. Par le terme "système de verrouillage", on entend un verrou monte sur une partie de la structure annulaire, ledit verrou coopérant avec une interface de verrouillage montée sur l'autre partie de la structure annulaire. Habituellement mais non obligatoirement, le verrou est monté sur la structure fixe et l'interface de verrouillage est monté sur l'obturateur.

La structure annulaire de l'inverseur est délimitée radialement par deux parois minces, soit une paroi intérieure canalisant le flux de gaz de propulsion précité, et une paroi extérieure contre laquelle s'écoule l'air ambiant. Ces parois sont reliées entre elles par des raidisseurs, ce qui permet d'assurer la rigidité et la cohésion de l'inverseur malgré sa légèreté. Les systèmes de verrouillage sont habituellement montés sur les raidisseurs de la structure fixe et des obturateurs.

Le contrôle du bon verrouillage des obturateurs repose sur des moyens de détection et de signalisation électriques associée aux éléments mécaniques commandant le verrouillage. Ces moyens peuvent eux aussi tomber en panne ou émettre de faux signaux de verrouillage. Ceci peut occasionner une situation dangereuse et cependant indétectable lorsque l'aéronef est au sol et s'apprête à décoller, les obturateurs étant fermés mais non verrouillés. Le problème est de signaler de façon fiable au sol la fermeture des système de verrouillage.

L'invention propose un inverseur de poussée à visualisation de fermeture des verrous, cet inverseur comportant notamment une structure annulaire entourant le turbomoteur, ladite structure annulaire comportant une paroi intérieure et une paroi extérieure la délimitant radialement, ladite structure annulaire comportant une première partie ou structure fixe traversée radialement par des ouvertures radiales, ladite structure annulaire comportant aussi au moins une seconde partie mobile ou obturateur venant occulter lesdites ouvertures radiales, lesdits obturateurs étant maintenus verrouillés sur la structure fixe chacun par au moins un système de verrouillage, ledit système de verrouillage comportant un verrou solidaire d'une partie de la structure annulaire, ce verrou comportant un pêne pivotant sur une articulation, ce pêne coopérant avec une interface de verrouillage solidaire de l'autre partie. Un tel inverseur est remarquable en ce que :
a) Au moins un système de verrouillage est disposé contre une paroi délimitant radialement la structure annulaire,
b) le pêne dudit système de verrouillage émerge au moins partiellement de ladite paroi lorsqu'il est ouvert.

Une telle disposition a pour effet de rendre la position du pêne visible depuis l'extérieur de la structure annulaire lorsque ledit pêne est ouvert, et pour résultat de permettre un contrôle visuel au sol totalement fiable du bon verrouillage des obturateurs.

La présente invention à l'avantage d'être simple et peu coûteuse à mettre en oeuvre. Elle offre aussi à l'homme du métier une grande souplesse dans les formes possibles du pêne.

Dans une première forme de réalisation de l'invention, l'extrémité du pêne coopérant avec l'interface de verrouillage émerge elle-même de la structure fixe lorsque le pêne est ouvert.

Dans une seconde forme de réalisation, le pêne comporte un appendice émergeant de la paroi délimitant radicalement la structure annulaire lorsque le pêne est ouvert. Cette disposition permet de faire coopérer l'extrémité du pêne avec une interface de verrouillage située plus en profondeur à l'intérieur de la structure annulaire.

Avantageusement, le pêne ne dépassera pas de la paroi lorsqu'il est dans la position fermée. Cette disposition a pour effet de masquer le pêne lorsqu'il est dans cette position fermée et pour résultat de permettre un contrôle visuel du verrouillage plus commode par tout ou rien : Le pêne est visible lorsqu'il est ouvert et masqué lorsqu'il est fermé.

Avantageusement, le pêne comportera d'un cache susceptible d'être inscrit dans une ouverture pratiquée dans la paroi, ledit cache étant dans l'alignement de ladite paroi lorsque le pêne est fermé. Une telle disposition a pour effet d'assurer la continuité aérodynamique de la paroi lorsque le pêne est fermé.

L'invention sera mieux comprise et les avantages qu'elle procure apparaîtront plus clairement au vu de quelques exemples détaillés de réalisation et des figures annexées :
- la figure 1 illustre une nacelle complète vue de l'extérieur, avec un inverseur à obturateurs basculants du type dits "à portes",
- la figure 2 illustre par une vue en coupe longitudinale ce même inverseur,
- la figure 3 illustre la disposition d'un système de verrouillage de secours en position fermée à l'avant d'un obturateur basculant,
- la figure 4 illustre la disposition de ce même système de verrouillage en position ouverte, l'obturateur basculant étant lui-même entrouvert,
- la figure 5 illustre la disposition d'un système de verrouillage à l'arrière d'un obturateur,
- la figure 6 illustre la disposition des systèmes de verrouillage de secours sur un inverseur du type "à grille".

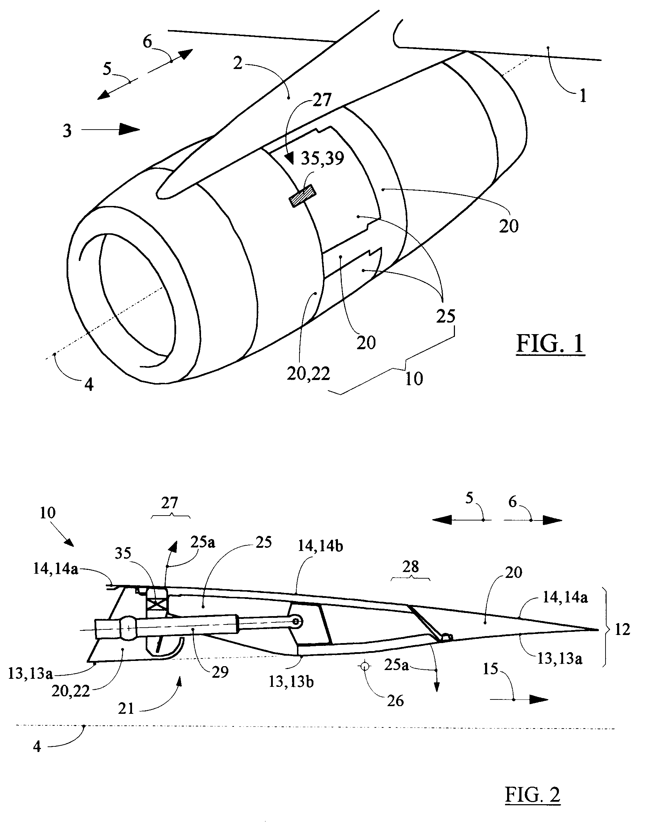

On se reportera en premier lieu à la figure 1. Sous l'aile 1 de l'avion non représenté, un pylône 2 maintient une nacelle 3 entourant le turbomoteur non représenté d' axe géométrique 4. La nacelle 3 a une forme sensiblement annulaire selon l'axe géométrique 4. On notera 5 la direction vers l'avant et 6 la direction vers l'arrière. L'inverseur de poussée 10 constitue un segment de la nacelle 3.

On se reportera maintenant à la figure 2. L'inverseur de poussée 10 comporte une structure annulaire 12 ayant une forme sensiblement de révolution autour de l'axe géométrique 4. La structure annulaire 12 est délimitée radialement par une paroi intérieure mince 13 et une paroi extérieure mince 14. La paroi intérieure 13 entoure et guide vers l'arrière 6 le flux de gaz de propulsion 15 généré par le turbomoteur non représenté. La structure annulaire 12 comporte une première partie 20 appelée structure fixe, ladite structure fixe 20 étant traversée par une pluralité d'ouvertures radiales 21. A l'avant 5 des ouvertures radiales 21 est disposé une structure de renforcement annulaire 22 appelée communément cadre avant. La structure annulaire 12 comporte aussi au moins une seconde partie 25 constituée par des obturateurs mobiles venant fermer les ouvertures radiales 21. Dans cet exemple, les obturateurs 25 sont basculants et sont appelés "portes". De tels obturateurs 25 sont habituellement montés sur des pivots 26, le basculement étant une simple rotation sur ces pivots 26. Ces obturateurs 25 peuvent être aussi montés sur un jeu de bielles non représenté, le basculement se faisant alors selon un mouvement plus complexe, mais sans incidence sur la présente invention. On référencera 27 et 28 respectivement la partie avant et la partie arrière de l'obturateur 25. L'obturateur est actionné à l'ouverture et à la fermeture par des moyens de commande 29 constitués dans cet exemple par un vérin hydraulique articulé à une extrémité sur la structure fixe 20 et à son autre extrémité sur l'obturateur 25. On référencera 13a et 14a la partie des parois 13 et 14 appartenant à la structure fixe 20. On référencera également 13b et 14b la partie des parois 13 et 14 appartenant à l'obturateur 25. Lorsque l'obturateur 25 est fermé, les parties de parois 13b et 14b sont dans l'alignement des parties de parois 13a, 14a sur la structure fixe 20. La structure annulaire 12 de l'inverseur 10 comporte aussi des systèmes de verrouillage 35 permettant de maintenir l'obturateur 25 dans sa position fermée sans l'intervention des moyens de commande 29. Ces systèmes de verrouillage 35 sont habituellement disposés entre la partie avant 27 de l'obturateur 25 et la structure fixe 20.

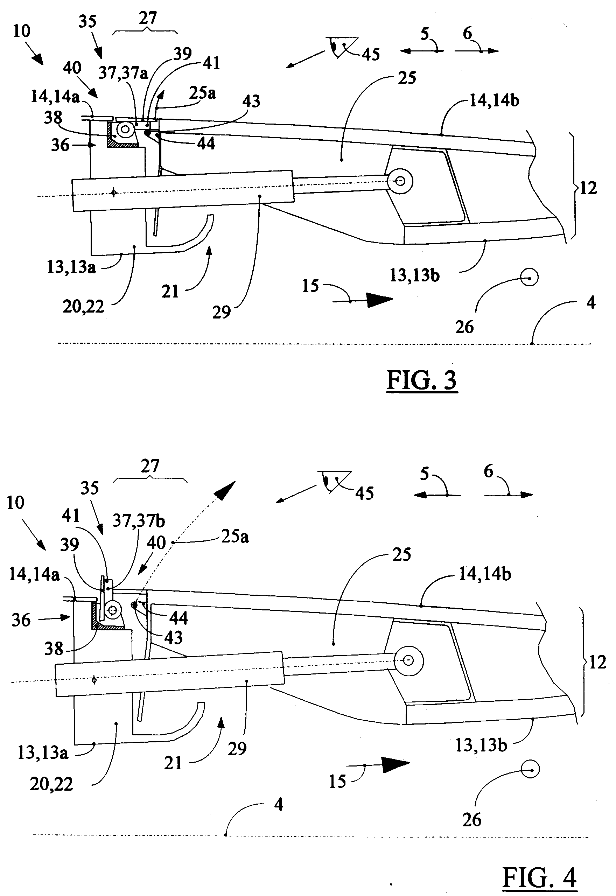

On se reportera maintenant à la figure 3. L'obturateur 25 est en position fermée. On notera 25a la trajectoire de l'obturateur 25 à l'ouverture. Le système de verrouillage 35 est disposé contre la paroi extérieure 14 et comporte un verrou 36 comportant lui même un pêne 37 articulé sur le corps 38 du verrou 36, ledit pêne 37 comportant aussi un cache 39 susceptible d'être inscrit dans une ouverture 40 pratiquée dans la paroi extérieure 14. Le verrou 36 comporte aussi des moyens d'actionnement du pêne 37, lesdits moyens d'actionnement étant non représentés car sans incidence sur l'invention. Le système de verrouillage de secours 35 comporte aussi une interface de verrouillage 43 constituée dans cet exemple par un galet 43 maintenu par un tirant 44 à l'extrémité avant 27 de l'obturateur 25. On référencera 41 l'extrémité du pêne 37 coopérant avec l'interface de verrouillage 43.

Lorsque le pêne 37 est dans sa position fermée 37a comme cela est illustré dans la figure 3, Le cache 39 est dans l'ouverture 40 de la paroi extérieure 14 et disposé dans l'alignement de cette paroi 14 afin d'en assurer la continuité aérodynamique.

Ainsi la fermeture et le verrouillage effectif de l'obturateur 25 sont rendus bien visibles à un observateur extérieur 45 par l'alignement des parties 14a et 14b de la paroi 14 entre elles et avec le cache 39.

On se reportera maintenant à la figure 4. L'obturateur 25 est entrouvert alors que le pêne 37 est en position ouverte 37b et émerge partiellement par son extrémité 41 de la paroi extérieure 14. On comprend que dans cette position 37b, le pêne 37 est maintenant bien visible de l'extérieur, ce qui signale le non verrouillage de l'obturateur 25. On reviendra temporairement à la figure 1 sur laquelle a été représentée la disposition des systèmes de verrouillage 35 avec le cache 39 à l'avant 27 des obturateurs 25.

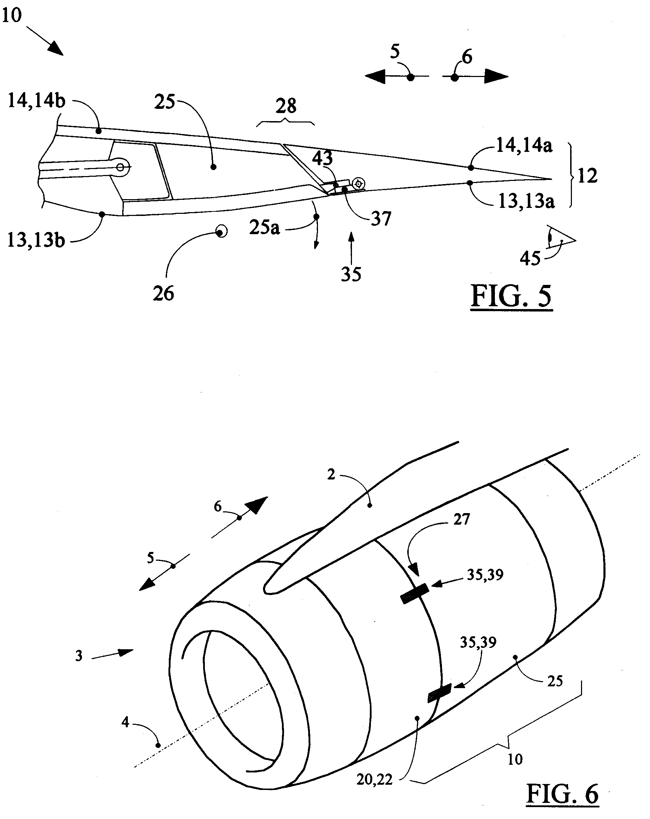

On se reportera maintenant à la figure 5. Dans cet exemple, un système de verrouillage 35 est disposé à l'extrémité arrière 28 de l'obturateur 25. On comprend que lorsque le pêne 37 est en position ouverte, il est en saillie de la paroi intérieure 13 et est bien visible à un observateur extérieur 45 à l'arrière 6 de l'inverseur 10.

On se reportera maintenant à la figure 6. l'inverseur 10 du type "à grille" comporte un obturateur 25 annulaire représenté ici en position fermée et masquant de ce fait les ouvertures radiales référencées 21 sur les figures 3 et 4. Au contraire des obturateurs 25 basculants précédemment illustrés, l'obturateur 25 s'ouvre dans cet exemple par une translation vers l'arrière 6 et se referme par une translation vers l'avant 5 jusqu'à ce qu'il arrive par sa partie avant 27 contre le cadre avant 22 où le verrouillage est assurée par une pluralité de systèmes de verrouillage 35 répartis au pourtour du cadre avant 22.

Dans cet exemple, et du fait que l'obturateur 25 se déplace sensiblement parallèlement à la paroi extérieure 14, l'extrémité 41 du pêne 37 coopérant avec l'interface de verrouillage 43 formera un coude passant à l'arrière 6 de l'interface de verrouillage 43 afin de retenir celle-ci.

## Revendications

1. Inverseur de poussée à visualisation de verrouillage, ledit inverseur (10) comportant notamment une structure annulaire (12) entourant le turbomoteur, ladite structure annulaire (12) comportant une paroi intérieure (13) et une paroi extérieure (14) la délimitant radialement, ladite structure annulaire (12) comportant également une première partie (20) ou structure fixe traversée radialement par des ouvertures radiales (21), ladite structure annulaire (12) comportant aussi au moins une seconde partie mobile (25) ou obturateur venant occulter lesdites ouvertures radiales (21), lesdits obturateurs (25) étant maintenus verrouillés sur la structure fixe (20) chacun, par au moins un système de verrouillage (35), ledit système de verrouillage (35) comportant un verrou (36) solidaire d'une partie (20, 25) de la structure annulaire (12), ledit verrou (36) comportant un pêne (37) articulê sur le corps (38) du verrou (36), ledit pêne (37) coopérant par une extrémité (41) avec une interface de verrouillage (43) solidaire de l'autre partie (25, 20) de la structure annulaire (12), caractérisé en ce que :
a) Au moins un système de verrouillage (35) est disposé contre une paroi (13, 14) délimitant radialement la structure annulaire (12),
b) Le pêne (37) dudit système de verrouillage (35) émerge au moins partiellement de ladite paroi (13, 14) lorsqu'il est ouvert,
afin de rendre la position du pêne (37) visible de l'extérieur lorsqu'il est ouvert.

2. Inverseur selon la revendication 1, caractérisé en ce que l'extrémité (41) du pêne (37) coopérant avec l'interface de verrouillage (43) émerge de la paroi (13, 14) délimitant radialement la structure annulaire (12) lorsque ledit pêne (37) est ouvert.

3. Inverseur selon la revendication 1, caractérisé en ce que le pêne (37) comporte un appendice émergeant de la paroi (13, 14) délimitant radialement la structure annulaire (12) lorsque ledit pêne (37) est ouvert.

4. Inverseur selon l'une quelconque des revendications 1 à 3, caractérisé en ce que le pêne (37) ne dépasse pas de la paroi (13, 14) délimitant radialement la structure annulaire (12) lorsque ledit pêne (37) est fermé, afin de masquer ledit pêne (37) lorsqu'il est fermé.

5. Inverseur selon la revendication 4, caractérisé en ce que le pêne (37) comporte un cache (39) susceptible de s'inscrire dans une ouverture (40) de la paroi (13, 14) délimitant radialement la structure annulaire (12), et en ce que ledit cache (39) est dans l'alignement de ladite paroi (13, 14) lorsque le pêne (37) est fermé, afin d'assurer la continuité aérodynamique de ladite paroi (13, 14) lorsque ledit pêne (37) est fermé.
